# EUROPEAN PATENT APPLICATION

(11) **EP 4 635 837 A1**
(43) Date of publication of application: **22.10.2025**
(21) Application number: 23903564.5
(22) Date of filing: 14.12.2023
(51) Int. Cl.: B62K 23/04, F02D 9/02, F02D 11/02, F02D 11/10, G05G 1/10, G05G 5/03, G05G 25/00

(54) **THROTTLE GRIP DEVICE**

(30) Priority: 15.12.2022 JP 2022200637; 15.12.2022 JP 2022200638
(71) Applicant: Asahi Denso Co., Ltd., Shizuoka 434-0046 (JP)
(72) Inventor: ISHIBASHI Ryuki, Hamamatsu-shi, Shizuoka 434-0046 (JP); UEMATSU Yasuhiko, Hamamatsu-shi, Shizuoka 434-0046 (JP)
(74) Representative: Cohausz & Florack
(86) International application number: PCT/JP2023/044835
(87) International publication number: WO 2024/128280

(57) **Abstract**

Provided is a throttle grip device that is capable of easily sealing a gap between an interlocking member and a case to certainly achieve a waterproof effect and a dustproof effect. A throttle grip device includes: an interlocking member 2 being able to rotate in conjunction with a throttle grip G; a case 1, the interlocking member 2 being rotatably held by the case 1; a cover member 11 covering an opening side end portion N1 of the case 1, the cover member 11 having an opening portion 11a allowing a surface end portion F1 having an engaged portion 2a of the interlocking member 2 to face the throttle grip G; and a magnetic sensor 9 capable of detecting a rotation angle of the throttle grip G by detecting a rotation angle of the interlocking member 2, a drive source of a vehicle being controllable according to the rotation angle of the throttle grip G detected by the magnetic sensor 9. The interlocking member 2 further includes a cylindrical portion 2e extending to a bottom side end portion N2 of the case 1.

## Description

### Technical Field

The present invention relates to a throttle grip device for controlling a drive source of a vehicle on the basis of a rotating operation of a throttle grip.

### Background Art

Throttle grip devices configured to detect a rotation angle of a throttle grip with a sensor and to send the detection value as an electrical signal to, for example, an electronic control unit mounted in a two-wheeled vehicle have been generally used in recent two-wheeled vehicles. Then, such an electronic control unit of a two-wheeled vehicle is configured to perform a predetermined operation on the basis of such a detection signal and to control a drive source of the two-wheeled vehicle (for example, the timing of igniting an engine or opening and closing of an intake valve or a throttle valve) on the basis of the operation result.

For example, PTL 1 discloses an existing throttle grip device. In the existing throttle grip device, engaging portions included in a throttle grip are engaged with engaged portions included in an interlocking member. Thus, the throttle grip and the interlocking member are connected to each other, and a sensor detects a rotation angle of the interlocking member. As a result, a rotation angle of the throttle grip is detected to control an engine.

In addition, for example, PTL 2 discloses another existing throttle grip device. In the existing throttle grip device, an engaging portion included in a throttle grip is engaged with engaged portions included in an interlocking member. Thus, the throttle grip and the interlocking member are connected to each other, and a sensor detects a rotation angle of the interlocking member. As a result, a rotation angle of the throttle grip is detected to control an engine.

### Citation List

### Patent Literature

PTL 1: Japanese Unexamined Patent Application Publication No. 2018-90065
PTL 2: Japanese Unexamined Patent Application Publication No. 2019-105244

### Summary of Invention

### Technical Problem

However, in the related art disclosed in PTL 1, a gap is formed between the interlocking member and a case. Thus, when the related art is used under a severe environment such as a race, for example, muddy water or dust may enter the case. Accordingly, the present applicant has considered that a seal member or a seal structure is formed between the interlocking member and the case to improve the waterproof effect and the dustproof effect. However, in the related art, the gap (clearance) between the interlocking member and the case is located in the case. Thus, the present applicant has found that it is difficult to form the seal member or the seal structure formed at such a position in the case to certainly achieve a waterproof effect and a dustproof effect.

In addition, in the related art disclosed in PTL 2, to set an operating torque generated during a rotating operation of the throttle grip, a resistance force application means is disposed separately from a return spring, and the operating torque is set on the basis of the sliding resistance generated by the resistance force application means. Thus, it is difficult to set an operating torque according to the requirements of a vehicle. In particular, there are various operating torque requirements of vehicles according to vehicle types and manufacturers. Thus, there is a problem that it is costly to prepare and attach different resistance force application means according to such respective various requirements.

The present invention is made in view of such circumstances, and an object of the present invention is to provide a throttle grip device that is capable of easily sealing a gap between an interlocking member and a case to certainly achieve a waterproof effect and a dustproof effect and that is capable of easily setting a predetermined operating torque according to requirements.

### Solution to Problem

According to the invention described in Claim 1, a throttle grip device includes: a throttle grip configured to be able to be rotated by a driver; an interlocking member including an engaged portion being able to be engaged with an engaging portion included in the throttle grip, the interlocking member being able to rotate in conjunction with the throttle grip; a case having an opening side end portion and a bottom side end portion, the interlocking member being rotatably held by the case; a cover member covering the opening side end portion of the case, the cover member having an opening portion allowing a surface end portion having the engaged portion of the interlocking member to face the throttle grip; and a rotation angle detection means capable of detecting a rotation angle of the throttle grip by detecting a rotation angle of the interlocking member, a drive source of a vehicle being controllable according to the rotation angle of the throttle grip detected by the rotation angle detection means. The interlocking member further includes a cylindrical portion extending to the bottom side end portion of the case.

According to the invention described in Claim 2, the throttle grip device according to Claim 1 further includes an urging means configured to urge the interlocking member toward an initial position during rotation of the throttle grip, the urging means being housed in a gap between the case and the cylindrical portion of the interlocking member.

According to the invention described in Claim 3, the throttle grip device according to Claim 1 further includes: a first seal member sealing a gap between the interlocking member and the opening portion of the cover member; and a second seal member sealing a gap between the cylindrical portion of the interlocking member and the bottom side end portion of the case.

According to the invention described in Claim 4, the throttle grip device according to Claim 3 further includes a third seal member sealing a gap between a peripheral portion of the opening side end portion of the case and a peripheral portion of the cover member.

According to the invention described in Claim 5, the throttle grip device according to Claim 4 further includes a rotation member configured to rotate in conjunction with the interlocking member. The rotation angle detection means is capable of detecting a rotation angle of the throttle grip by detecting a rotation angle of the rotation member, and the cover member covers the part where the rotation member is disposed, while hermetically sealing the part with the first seal member and the third seal member.

According to the invention described in Claim 6, in the throttle grip device according to Claim 5, the rotation member rotates around a shaft member, and the cover member has a recess supporting one end of the shaft member.

According to the invention described in Claim 7, a throttle grip device includes: a throttle grip configured to be able to be rotated by a driver; an interlocking member including an engaged portion being able to be engaged with an engaging portion included in the throttle grip, the interlocking member being able to rotate in conjunction with the throttle grip; a case having an opening side end portion and a bottom side end portion, the interlocking member being rotatably held by the case; a rotation angle detection means capable of detecting a rotation angle of the throttle grip by detecting a rotation angle of the interlocking member and an urging means configured to urge the interlocking member toward an initial position during rotation of the throttle grip, a drive source of a vehicle being controllable according to the rotation angle of the throttle grip detected by the rotation angle detection means. A resistance force application means configured to generate a sliding resistance during rotation of the interlocking member, and a plurality of seal means sealing a gap between the interlocking member and the case at predetermined positions are selectively attachable, and the urging means and the selectively attached resistance force application means or seal means are configured to generate a predetermined operating torque during rotation of the interlocking member.

According to the invention described in Claim 8, in the throttle grip device according to Claim 7, the seal means are formed by seal members having different diameters.

According to the invention described in Claim 9, in the throttle grip device according to Claim 7, the resistance force application means is formed by a friction material assembled in a state of being in contact with a sliding surface of the interlocking member.

According to the invention described in Claim 10, the throttle grip device according to Claim 7 further includes a cover member covering the opening side end portion of the case, the cover member having an opening portion allowing the engaged portion of the interlocking member to be engaged with the engaging portion. At least one of the selectively attachable seal means is formed by a first seal member sealing a gap between the interlocking member and the opening portion of the cover member.

According to the invention described in Claim 11, in the throttle grip device according to Claim 10, at least one of the selectively attachable seal means is formed by a second seal member sealing a gap between the interlocking member and the bottom side end portion of the case.

According to the invention described in Claim 12, the throttle grip device according to Claim 7 further includes a cover member covering the opening side end portion of the case, the cover member having an opening portion allowing the engaged portion of the interlocking member to be engaged with the engaging portion. The interlocking member is configured to include a cylindrical portion extending to the bottom side end portion of the case, and the selectively attachable seal means are formed by a first seal member sealing a gap between the interlocking member and the opening portion of the cover member, and a second seal member sealing a gap between the cylindrical portion of the interlocking member and the bottom side end portion of the case.

### Advantageous Effects of Invention

According to the invention in Claim 1, the interlocking member includes the cylindrical portion extending to the bottom side end portion of the case. Thus, the gap between the tip portion of the cylindrical portion and the bottom side end portion of the case can be sealed. Accordingly, it is possible to easily seal the gap between the interlocking member and the case and to certainly achieve a waterproof effect and a dustproof effect. In addition, the interlocking member extends from the surface end portion facing the opening portion of the cover member to the bottom side end portion of the case. Thus, it is possible to stably rotate the interlocking member.

According to the invention in Claim 2, the throttle grip device includes the urging means configured to urge the interlocking member toward the initial position during rotation of the throttle grip. In addition, the urging means is housed in the gap between the case and the cylindrical portion of the interlocking member. Thus, it is possible to effectively use the gap between the case and the cylindrical portion of the interlocking member and to reduce dead space.

According to the invention in Claim 3, the throttle grip device includes the first seal member sealing the gap between the interlocking member and the opening portion of the cover member, and the second seal member sealing the gap between the cylindrical portion of the interlocking member and the bottom side end portion of the case. Thus, it is possible to seal both ends of the interlocking member and to stably rotate the interlocking member.

According to the invention in Claim 4, the throttle grip device includes the third seal member sealing the gap between the peripheral portion of the opening side end portion of the case and the peripheral portion of the cover member. Thus, it is possible to seal the gap between the case and the cover member in addition to sealing the gap between the interlocking member and the case.

According to the invention in Claim 5, the rotation member configured to rotate in conjunction with the interlocking member is included, and the rotation angle detection means is configured to detect a rotation angle of the rotation member. Thus, it is possible to detect a rotation angle of the throttle grip, and the cover member covers the part where the rotation member is disposed, while hermetically sealing the part with the first seal member and the third seal member. Accordingly, it is possible to seal, with the first seal member and the third seal member, the part where the rotation member is disposed.

According to the invention in Claim 6, the rotation member rotates around the shaft member, and the cover member has the recess supporting the one end of the shaft member. As a result, the cover member is able to have both the function of covering the position where the rotation member is disposed and the function of supporting the one end of the shaft member.

According to the invention in Claim 7, the resistance force application means configured to generate a sliding resistance during rotation of the interlocking member, and the plurality of seal means sealing the gap between the interlocking member and the case at predetermined positions are selectively attachable. In addition, the urging means and the selectively attached resistance force application means or seal means are configured to generate a predetermined operating torque during rotation of the interlocking member. Thus, it is possible to easily set a predetermined operating torque according to requirements. In addition, the selectively attached seal means are capable of achieving a seal effect in addition to generating an operating torque.

According to the invention in Claim 8, the seal means are formed by the seal members having different diameters. Thus, it is possible to easily set a predetermined operating torque with a combination of the selectively attached seal members.

According to the invention in Claim 9, the resistance force application means is formed by the friction material assembled in the state of being in contact with the sliding surface of the interlocking member. Thus, it is possible to easily generate a desired sliding resistance and to thus generate an operating torque.

According to the invention in Claim 10, the throttle grip device includes the cover member covering the opening side end portion of the case, the cover member having the opening portion allowing the engaged portion of the interlocking member to be engaged with the engaging portion. In addition, at least one of the selectively attachable seal means is formed by the first seal member sealing the gap between the interlocking member and the opening portion of the cover member. Thus, it is possible to set an operating torque while the first seal member seals the gap between the interlocking member and the opening portion of the cover member.

According to the invention in Claim 11, at least one of the selectively attachable seal means is formed by the second seal member sealing the gap between the interlocking member and the bottom side end portion of the case. Thus, it is possible to set an operating torque while the second seal member seals the gap between the interlocking member and the bottom side end portion of the case.

According to the invention in Claim 12, the throttle grip device includes the cover member covering the opening side end portion of the case, the cover member having the opening portion allowing the engaged portion of the interlocking member to be engaged with the engaging portion. In addition, the interlocking member is configured to include the cylindrical portion extending to the bottom side end portion of the case. In addition, the selectively attachable seal means are formed by the first seal member sealing the gap between the interlocking member and the opening portion of the cover member, and the second seal member sealing the gap between the cylindrical portion of the interlocking member and the bottom side end portion of the case. Thus, it is possible to generate a predetermined operating torque according to each operating torque generated by the first seal member and the second seal member.

### Brief Description of Drawings

[Fig. 1] Fig. 1 is an overall perspective view illustrating a throttle grip device according to an embodiment of the present invention.
[Fig. 2] Fig. 2 is a perspective view illustrating the throttle grip device from which a switch case is detached.
[Fig. 3] Fig. 3 is a three-view diagram illustrating a main component unit of the throttle grip device.
[Fig. 4] Fig. 4 is a sectional view taken along line IV-IV in Fig. 3.
[Fig. 5] Fig. 5 is a sectional view taken along line V-V in Fig. 3.
[Fig. 6] Fig. 6 is an exploded perspective view illustrating the main components (the front side) of the throttle grip device.
[Fig. 7] Fig. 7 is an exploded perspective view illustrating the main components (the rear side) of the throttle grip device.
[Fig. 8] Fig. 8 is a perspective view illustrating a throttle grip of the throttle grip device.
[Fig. 9] Fig. 9 is a two-view diagram illustrating a case of the throttle grip device.
[Fig. 10] Fig. 10 is a three-view diagram illustrating an interlocking member of the throttle grip device.
[Fig. 11] Fig. 11 is a three-view diagram illustrating a cover member of the throttle grip device.
[Fig. 12] Fig. 12 includes perspective views illustrating the throttle grip device in which a first urging means, a first seal means, and a second seal means are attached to the interlocking member.
[Fig. 13] Fig. 13 is a graph illustrating the relationship between an operating angle and an operating torque when the first urging means, a resistance force application means, the first seal means, and the second seal means are individually attached to the throttle grip device.
[Fig. 14] Fig. 14 is a graph illustrating the relationship between an operating angle and an operating torque when the first urging means and other components (the resistance force application means, the first seal means, and the second seal means) are combined and attached to the throttle grip device.
[Fig. 15] Fig. 15 is a sectional view illustrating a throttle grip device according to another embodiment of the present invention.
[Fig. 16] Fig. 16 includes perspective views illustrating the throttle grip device according to the other embodiment in which the first urging means, a first oil seal, and a second oil seal are attached to the interlocking member.

### Description of Embodiments

An embodiment of the present invention will be described below in detail with reference to drawings.

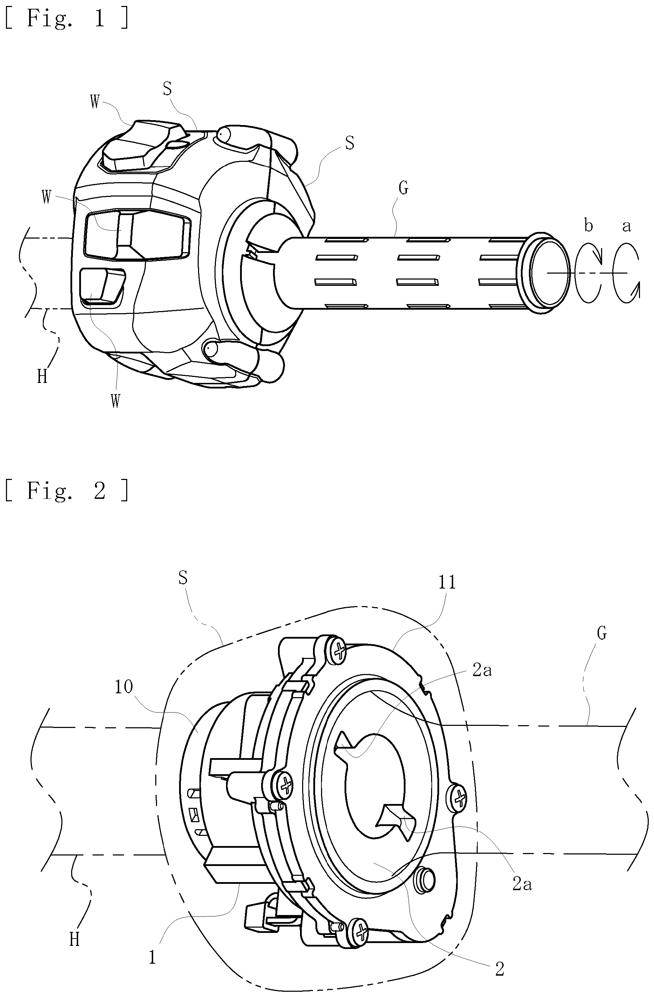

As illustrated in Figs. 1 and 2, a throttle grip device according to the present embodiment is configured to detect a rotation angle of a throttle grip G attached to a handlebar H of a two-wheeled vehicle (vehicle) and to send the detection signal to, for example, an electronic control unit (ECU) mounted in the two-wheeled vehicle to control a drive source (an engine). Specifically, as illustrated in Figs. 1 to 7, the throttle grip device according to the present embodiment is configured to include the throttle grip G, a case 1, an interlocking member 2, a first urging means 3, second urging means 4, a rotation member 5, a magnetic sensor 9 (a rotation angle detection means), a resistance force application means 7, and a first seal member 12 and a second seal member 13 serving as seal means.

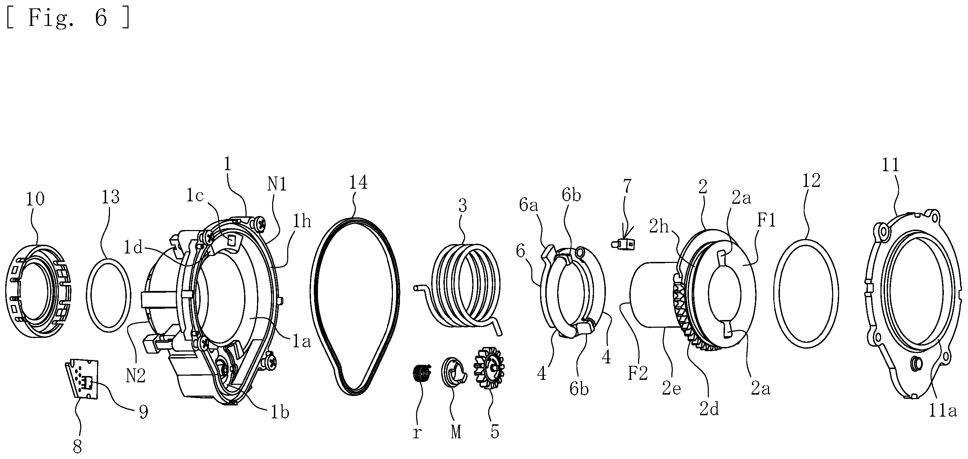

The case 1 is disposed in a switch case S (see Figs. 1 and 2) attached to the distal end side of the handlebar H (the base end side of the throttle grip G) of the two-wheeled vehicle (vehicle) and houses various components forming the throttle grip device. In addition, for example, the interlocking member 2 and the rotation member 5 are rotatably held by the case 1. As illustrated in Figs. 6, 7, and 9, the case 1 is formed by a container member having an opening side end portion N1 and a bottom side end portion N2 and is configured such that various components are inserted into the case 1 through the opening side end portion N1. Various switches W for operating electrical components of the vehicle are attached to the switch case S.

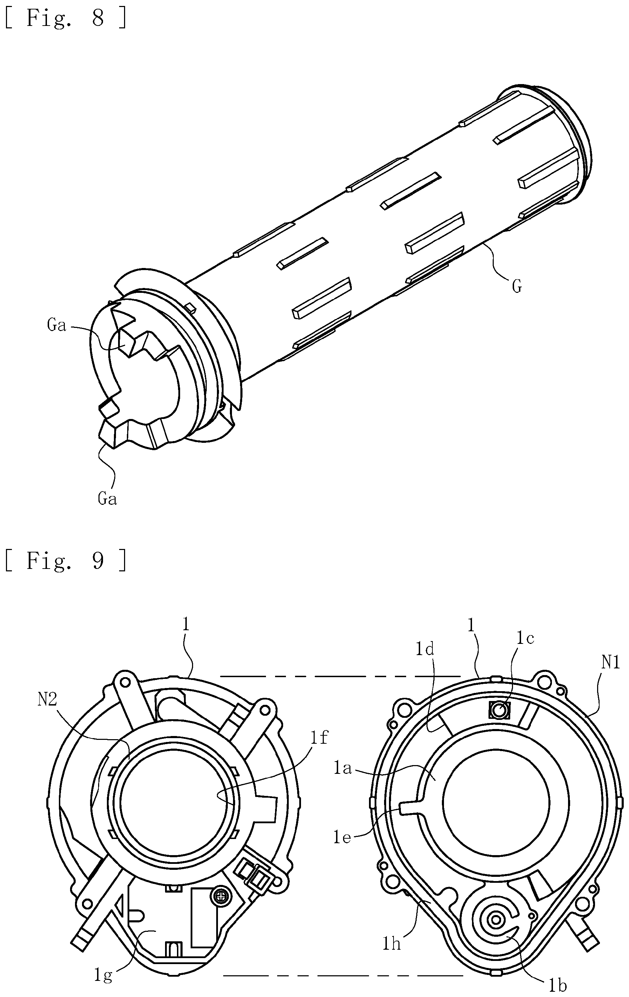

In addition, as illustrated in Fig. 9, the case 1 according to the present embodiment is formed by a molded component including a first housing portion 1a, in which the interlocking member 2 is rotatably housed, a second housing portion 1b, in which the rotation member 5 is rotatably housed, a third housing portion 1c, which houses the resistance force application means 7, a stopper portion 1d, with which a projection 6a of an urging force selection means 6 is able to come into contact, a catch portion 1e, on which one end portion of the first urging means 3 is able to be caught, an annular recess 1f, to which the second seal member 13 is attached, a housing recess 1g, in which the magnetic sensor 9 and a printed circuit board 8 are housed, and an attachment recess 1h, to which the third seal member 14 is attached.

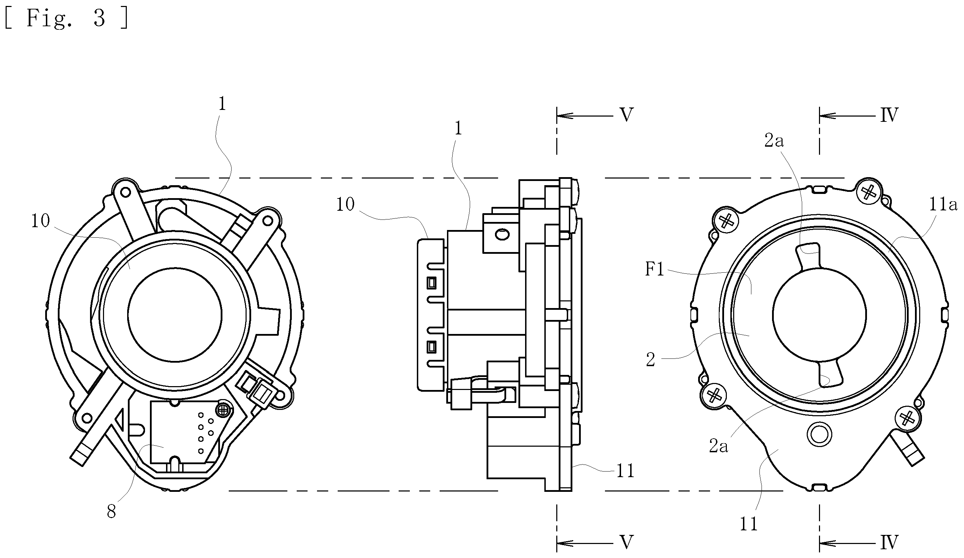

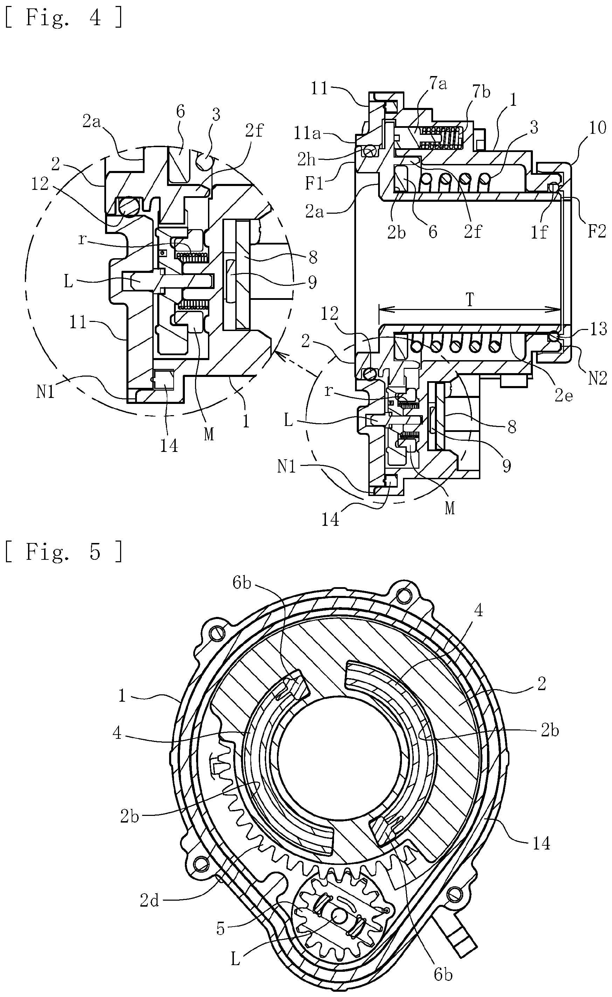

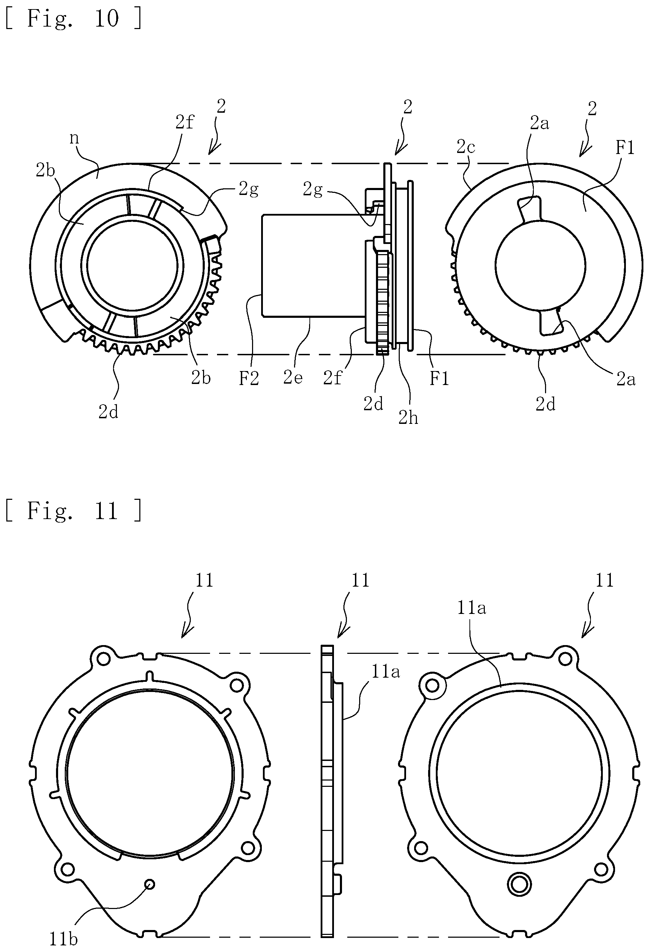

As illustrated in Figs. 3 and 4, a cover member 11 is formed by a plate member that covers the opening side end portion N1 of the case 1 and that has an opening portion 11a allowing a surface end portion F1 having engaged portions 2a of the interlocking member 2 to face the throttle grip G. As illustrated in Fig. 11, the cover member 11 has a shape along an outline of the opening side end portion N1 of the case 1 and has a recess 11b, which supports one end of a shaft member L and which is formed at a part of the cover member 11 corresponding to the position in the case 1 (the second housing portion 1b) where the rotation member 5 is disposed.

The throttle grip G extends from the switch case S and is able to be gripped and rotated by a driver. As illustrated in Figs. 1 and 2, the throttle grip G is able to rotate as follows: a forward rotation a in a predetermined direction around the axis from the initial position and a counter rotation b in the direction opposite to the predetermined direction. Engaging portions Ga (see Fig. 8) having a projecting shape are formed on the base end side of the throttle grip G. The engaging portions Ga are engaged with the engaged portions 2a (see, for example, Figs. 3, 6, and 10) of the interlocking member 2. Thus, the throttle grip G and the interlocking member 2 are connected to each other.

The interlocking member 2 includes the engaged portions 2a, which are able to be engaged with the engaging portions Ga included in the throttle grip G and which have a recessed shape, and is able to rotate in conjunction with the forward rotation a and the counter rotation b of the throttle grip G. Specifically, as illustrated in Fig. 10, the interlocking member 2 according to the present embodiment is formed by a molded member including the engaged portions 2a, a pair of housing portions 2b, a flange 2c, a gear 2d, a cylindrical portion 2e, an annular wall portion 2f, and an attachment groove 2h. In addition, the interlocking member 2 according to the present embodiment has a sliding surface n, on which the resistance force application means 7 slides.

The engaged portions 2a are formed by recessed-shaped portions formed at respective positions corresponding to the engaging portions Ga of the throttle grip G. The base end side of the throttle grip G is connected to the interlocking member 2 in a state in which the engaging portions Ga are fitted into and engaged with the engaged portions 2a. Thus, the interlocking member 2 is able to rotate in conjunction with rotation of the throttle grip G. The engaged portions 2a are formed in the surface end portion F1 of the interlocking member 2 and face outside via the opening portion 11a of the cover member 11 as illustrated in Fig. 3 when the interlocking member 2 is assembled to the case 1.

The housing portions 2b are formed by a pair of groove-shaped portions that have an arc shape and that are located at respective positions between the engaged portions 2a. The second urging means 4 are able to be housed in the respective housing portions 2b. In addition, the interlocking member 2 includes the flange 2c in a circumferential direction, and the gear 2d in a predetermined area. As illustrated in Fig. 5, the gear 2d is assembled in a state of being engaged with a gear formed at the outer periphery of the rotation member 5. Thus, the rotation member 5 rotates in conjunction with rotation of the interlocking member 2.

In addition, as illustrated in Fig. 4, the cylindrical portion 2e extending to the bottom side end portion N2 of the case 1 is integrally formed with the interlocking member 2 according to the present embodiment. The cylindrical portion 2e has a cylindrical shape having a length extending from the engaged portion 2a to a tip portion F2 of T (see Fig. 4). The first urging means 3 is configured to be housed in a gap between the case 1 and the interlocking member 2 in a state in which the cylindrical portion 2e is assembled in the case 1.

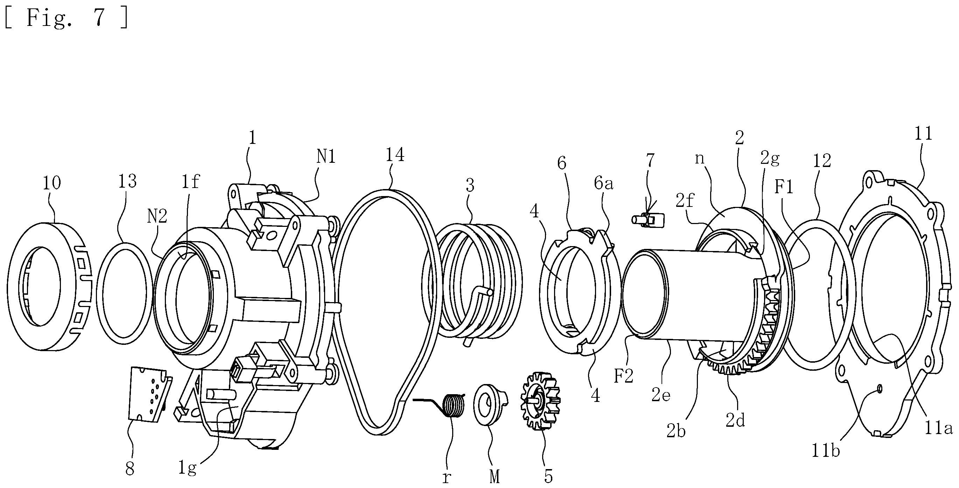

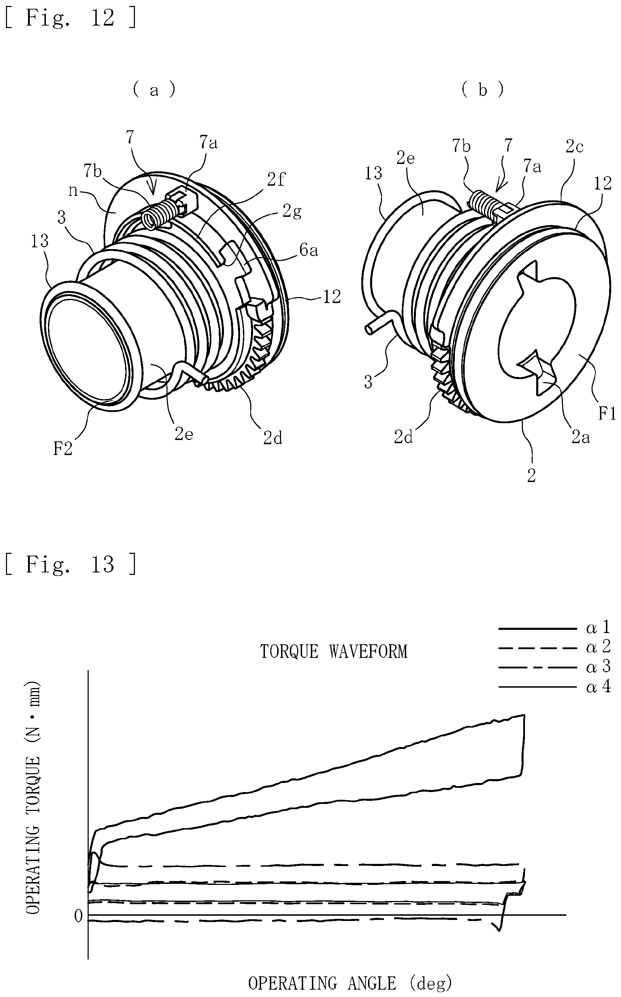

As illustrated in Figs. 7 and 10, the annular wall portion 2f is formed by a wall-shaped portion having an arc shape along the outer periphery of each of the housing portions 2b. A cutout 2g is formed in part of the annular wall portion 2f. As illustrated in Fig. 12, when the urging force selection means 6 is attached to the rear side of the interlocking member 2, the projection 6a of the urging force selection means 6 is inserted into the cutout 2g. The attachment groove 2h is formed by a groove-shaped portion formed along an outer peripheral surface of the surface end portion F1 of the interlocking member 2. The first seal member 12 is inserted into the attachment groove 2h.

The first urging means 3 is formed by a helical torsion spring and is a return spring for urging the interlocking member 2 toward the initial position during the forward rotation a of the throttle grip G. Specifically, the first urging means 3 is assembled such that one end of the first urging means 3 is caught on the catch portion 1e of the case 1 and the other end of the first urging means 3 is caught on the interlocking member 2. The interlocking member 2 rotates against the urging force of the first urging means 3 during the forward rotation a of the throttle grip G. Thus, the urging force is transmitted to the throttle grip G and causes the throttle grip G to return to the initial position.

The second urging means 4 are formed by a pair of coil springs that are housed in the housing portions 2b of the interlocking member 2 and that are attached such that one end of each of the coil springs is in contact with a spring receiving portion 6b (see Figs. 5 and 6) included in the urging force selection means 6. The second urging means 4 are used for urging the interlocking member 2 toward the initial position during the counter rotation b of the throttle grip G. Specifically, with the second urging means 4, the projection 6a of the urging force selection means 6 is caught on the stopper portion 1d of the case 1 during the counter rotation b of the throttle grip G. Accordingly, the interlocking member 2 rotates while the urging force selection means 6 is stopped, and the interlocking member 2 rotates against the urging force of the second urging means 4. Thus, the urging force is transmitted to the throttle grip G and causes the throttle grip G to return to the initial position. The projection 6a of the urging force selection means 6 is not caught on the stopper portion 1d of the case 1 during the forward rotation a of the throttle grip G. Thus, the second urging means 4 rotate in conjunction with the urging force selection means 6 and do not generate such an urging force.

The rotation member 5 is able to rotate in conjunction with the interlocking member 2, is housed in the second housing portion 1b (see Fig. 9) of the case 1, and is rotatable around the shaft member L (see **Fig.** 4). Then, when the interlocking member 2 rotates, the rotation member 5 rotates around the shaft member L by a rotation angle according to the rotation angle of the interlocking member **2.** As illustrated in **Fig. 4****,** the rotation member 5 is connected to a magnet M via the shaft member L. In conjunction with the rotation member **5,** the magnet M is configured to rotate around the shaft member **L.** A helical torsion spring r is assembled to the shaft member **L.** The helical torsion spring r urges the rotation member 5 in a rotation direction, thus preventing backlash between the rotation member 5 and the gear 2d of the interlocking member 2.

As illustrated in Fig. 4, the magnetic sensor 9 (the rotation angle detection means) is formed by a sensor disposed at a position on the extension of the shaft member L. The magnetic sensor 9 is capable of detecting a rotation angle of the throttle grip G by detecting a magnetic change (a change in magnetic field direction) of the magnet M. Specifically, the magnetic sensor 9 is capable of acquiring an output voltage according to the change in the magnetic field (the change in magnetic flux density) of the magnet M. For example, the magnetic sensor 9 is formed by a Hall element that is a magnetic sensor using the Hall effect (specifically, a linear Hall IC capable of acquiring an output voltage in proportion to the magnetic field (the magnetic flux density) of the magnet M). The magnetic sensor 9 according to the present embodiment is formed on the printed circuit board 8, on which a predetermined electric circuit is printed. In addition, the printed circuit board 8 on which the magnetic sensor 9 is mounted is housed in the housing recess 1g of the case 1, is then subjected to molding with a predetermined resin material, and thus becomes waterproof and dustproof.

Then, in the throttle grip device according to the present embodiment, in conjunction with the forward rotation a of the throttle grip G, the interlocking member 2 rotates in the same direction. In addition, in conjunction with the rotation of the interlocking member 2, the rotation member 5 rotates according to the gear ratio (the gear ratio between the interlocking member 2 and the rotation member 5), and the magnet M connected to the rotation member 5 also rotates in the same direction by the same angle. Thus, the magnetic field of the magnet M is changed by the rotation angle of the rotation member 5. Accordingly, the throttle grip device according to the present embodiment is capable of acquiring an output voltage according to the rotation angle and is capable of detecting a rotation angle of the interlocking member 2 (that is, a rotation angle of the throttle grip G) on the basis of the output voltage. The rotation angle of the throttle grip G detected in this manner is sent as an electrical signal to the engine control unit (ECU) mounted in the two-wheeled vehicle. Thus, it is possible to control the engine (the drive source) of the vehicle according to the sent rotation angle of the throttle grip G.

On the other hand, in conjunction with the counter rotation b of the throttle grip G, the interlocking member 2 rotates in the same direction. In addition, in conjunction with the rotation of the interlocking member 2, the rotation member 5 rotates according to the gear ratio (the gear ratio between the interlocking member 2 and the rotation member 5), and the magnet M attached to the rotation member 5 also rotates in the same direction by the same angle. Thus, the magnetic field of the magnet M is changed by the rotation angle of the rotation member 5. Accordingly, the throttle grip device according to the present embodiment is capable of acquiring an output voltage according to the rotation angle and is capable of detecting the counter rotation b of the throttle grip G.

When detecting the counter rotation b of the throttle grip G in this manner, the throttle grip device according to the present embodiment is capable of activating or not activating a predetermined function of the two-wheeled vehicle. The present embodiment is applied to a two-wheeled vehicle including a constant vehicle speed maintaining device (an auto-cruise device) configured to maintain a constant travelling speed and is configured to be able to stop (cancel) the constant vehicle speed maintaining control when the counter rotation b of the throttle grip G is detected.

The resistance force application means 7 is capable of generating a rotational load by generating a sliding resistance (sliding frictional resistance) during rotation of the throttle grip G. The resistance force application means 7 is configured to include a friction member 7a, which is formed by a friction material assembled in a state of being in contact with the sliding surface n formed in the circumferential direction of the interlocking member 2, and a spring 7b, which is configured to urge the friction member 7a. The resistance force application means 7 is housed in the third housing portion 1c of the case 1 and is assembled such that the friction member 7a pushes the sliding surface n of the interlocking member 2 with the urging force of the spring 7b. Thus, when the interlocking member 2 rotates in conjunction with a rotating operation of the throttle grip G, the friction member 7a slides on the sliding surface n to generate a frictional force, and the resistance force application means 7 generates a predetermined operating torque (an operating load).

Here, the throttle grip device according to the present embodiment includes the first seal member 12, which seals a gap between the interlocking member 2 and the opening portion 11a of the cover member 11, the second seal member 13, which seals a gap between the cylindrical portion 2e of the interlocking member 2 and the bottom side end portion N2 of the case 1, and the third seal member 14, which seals a gap between a peripheral portion of the opening side end portion N1 of the case 1 and a peripheral portion of the cover member 11.

The first seal member 12 according to the present embodiment is formed by an O ring having a diameter larger than that of the second seal member 13. As illustrated in Fig. 12, the first seal member 12 according to the present embodiment is inserted into the attachment groove 2h formed on the surface end portion F1 side of the interlocking member 2. As illustrated in Fig. 4, the first seal member 12 according to the present embodiment is assembled while being pushed in radial directions by an inner peripheral portion of the opening portion 11a of the cover member 11. Thus, when the first seal member 12 seals the gap between the interlocking member 2 and the opening portion 11a of the cover member 11 and the interlocking member 2 rotates in conjunction with a rotating operation of the throttle grip G, the interlocking member 2 generates a predetermined operating torque (an operating load).

The second seal member 13 according to the present embodiment is formed by an O ring having a diameter smaller than that of the first seal member 12. As illustrated in Fig. 12, the second seal member 13 according to the present embodiment is attached to the tip portion F2 side of the cylindrical portion 2e of the interlocking member 2. As illustrated in Fig. 4, the second seal member 13 according to the present embodiment is assembled while being inserted into the annular recess 1f formed in the bottom side end portion N2 of the case 1 and being pushed in radial directions. Thus, when the second seal member 13 seals the gap between the cylindrical portion 2e and the bottom side end portion N2 of the case 1 and the interlocking member 2 rotates in conjunction with a rotating operation of the throttle grip G, the interlocking member 2 generates a predetermined operating torque (an operating load). The second seal member 13 is retained by a retaining member 10 in a state of being inserted into the annular recess 1f.

The third seal member 14 according to the present embodiment is formed by a gasket. As illustrated in Fig. 9, the third seal member 14 according to the present embodiment is inserted into the attachment recess 1h formed along the peripheral portion of the opening side end portion N1 of the case 1. As illustrated in Fig. 4, the third seal member 14 according to the present embodiment is assembled while being pushed in the axial direction at the peripheral portion of the cover member 11. Thus, in the throttle grip device according to the present embodiment, the gap between the peripheral portion of the case 1 and the peripheral portion of the cover member 11 is sealed.

In addition, as illustrated in Fig. 4, the cover member 11 according to the present embodiment is configured to hermetically seal, with the first seal member 12 and the third seal member 14, the part where the rotation member 5 is disposed while covering the part where the rotation member 5 is disposed. That is, as illustrated in Figs. 4 and 9, the first seal member 12 is assembled at an inner position, and the third seal member 14 is assembled at an outer position. Thus, when the cover member 11 is assembled, the second housing portion 1b, which is located at the position where the rotation member 5 is disposed, is hermetically sealed by the first seal member 12 and the third seal member 14. In addition, the cover member 11 has the recess 11b, which supports the one end of the shaft member L, thus allowing the rotation member 5 and the magnet M to rotate while the state in which the second housing portion 1b, which is located at the position where the rotation member 5 is disposed, is hermetically sealed is maintained.

On the other hand, as illustrated in Fig. 13, the operating torque (operating load) when the interlocking member 2 rotates in conjunction with a rotating operation of the throttle grip G is able to be calculated by adding together an operating torque generated by the first urging means 3 (α1), an operating torque generated by the resistance force application means 7 (α2), an operating torque generated by the first seal member 12 (α3), and an operating torque generated by the second seal member 13 (α4). The graph in Fig. 13 illustrates the relationship between an operating angle and an operating torque when the first urging means 3, the resistance force application means 7, the first seal member 12, and the second seal member 13 are individually assembled to the throttle grip device.

Here, the resistance force application means 7, the first seal member 12, and the second seal member 13 are selectively attachable to the throttle grip device according to the present embodiment. The first urging means 3 and the selectively attached resistance force application means 7, first seal member 12, or second seal member 13 (seal means having different diameters) are configured to generate a predetermined operating torque (preset desired operating torque) during rotation of the interlocking member 2.

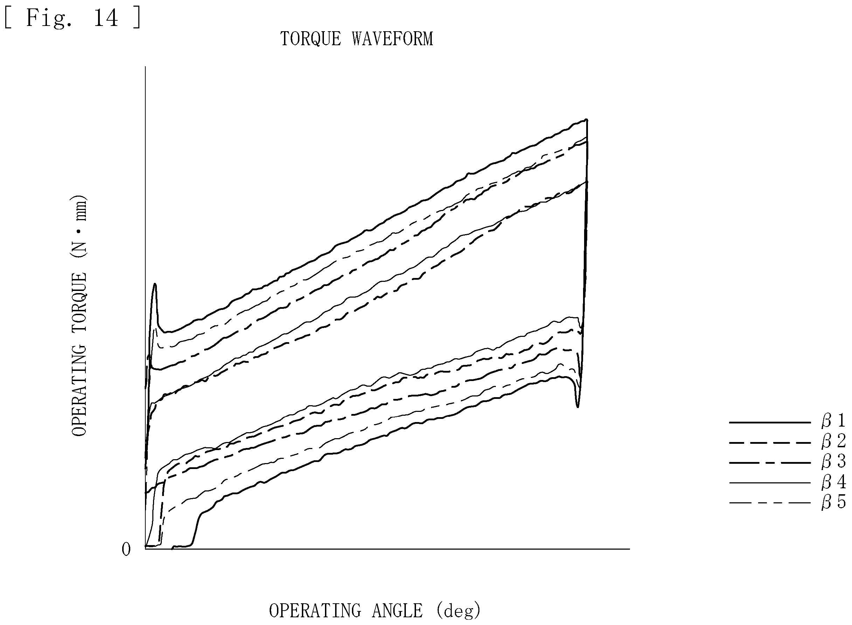

That is, in addition to the first urging means 3, the resistance force application means 7, the first seal member 12, and the second seal member 13 are selectively attached to the throttle grip device according to the present embodiment. Thus, as illustrated in Fig. 14, it is possible to generate an operating torque (β1) that is the sum of the operating torques (α1 + α2 + α3 + α4). In addition, when in addition to the first urging means 3, the resistance force application means 7 is selectively attached to the throttle grip device according to the present embodiment, it is possible to generate an operating torque (β2) that is the sum of the operating torques (α1 + α2).

In addition, when in addition to the first urging means 3, the first seal member 12 is selectively attached to the throttle grip device according to the present embodiment, it is possible to generate an operating torque (β3) that is the sum of the operating torques (α1 + α3). In addition, when in addition to the first urging means 3, the second seal member 13 is selectively attached to the throttle grip device according to the present embodiment, it is possible to generate an operating torque (β4) that is the sum of the operating torques (α1 + α4). Furthermore, when in addition to the first urging means 3, the first seal member 12 and the second seal member 13 are selectively attached to the throttle grip device according to the present embodiment, it is possible to generate an operating torque (β5) that is the sum of the operating torques (α1 + α3 + α4).

According to the present embodiment, the interlocking member 2 includes the cylindrical portion 2e extending to the bottom side end portion N2 of the case 1. Thus, the gap between the tip portion F2 of the cylindrical portion 2e and the bottom side end portion N2 of the case 1 is sealed. Accordingly, it is possible to easily seal the gap between the interlocking member 2 and the case 1 and to certainly achieve a waterproof effect and a dustproof effect. In addition, the interlocking member 2 extends from the surface end portion F1 facing the opening portion 11a of the cover member 11 to the bottom side end portion N2 of the case 1. Thus, it is possible to stably rotate the interlocking member 2.

In addition, the throttle grip device according to the present embodiment includes the first urging means 3 configured to urge the interlocking member 2 toward the initial position during rotation of the throttle grip G. In addition, the first urging means 3 is housed in the gap between the case 1 and the cylindrical portion 2e of the interlocking member 2. Thus, it is possible to effectively use the gap between the case 1 and the cylindrical portion 2e of the interlocking member 2 and to reduce dead space.

In addition, the throttle grip device according to the present embodiment includes the first seal member 12, which seals the gap between the interlocking member 2 and the opening portion 11a of the cover member 11, and the second seal member 13, which seals the gap between the cylindrical portion 2e of the interlocking member 2 and the bottom side end portion N2 of the case 1. Thus, it is possible to seal both ends of the interlocking member 2 and to stably rotate the interlocking member 2. Furthermore, the throttle grip device according to the present embodiment includes the third seal member 14, which seals the gap between the peripheral portion of the opening side end portion N1 of the case 1 and the peripheral portion of the cover member 11. Thus, it is possible to seal the gap between the case 1 and the cover member 11 in addition to sealing the gap between the interlocking member 2 and the case 1.

In addition, according to the present embodiment, the rotation member 5 configured to rotate in conjunction with the interlocking member 2 is included, and the magnetic sensor 9 is configured to detect a rotation angle of the rotation member 5. Thus, it is possible to detect a rotation angle of the throttle grip G, and the cover member 11 hermetically seals, with the first seal member 12 and the third seal member 14, the part where the rotation member 5 is disposed while covering the part where the rotation member 5 is disposed. Accordingly, it is possible to seal, with the first seal member 12 and the third seal member 14, the part where the rotation member 5 is disposed. In addition, the rotation member 5 according to the present embodiment rotates around the shaft member L, and the cover member 11 has the recess 11b, which supports the one end of the shaft member L. As a result, the cover member 11 is able to have both the function of covering the position where the rotation member 5 is disposed and the function of supporting the one end of the shaft member L.

Meanwhile, according to the present embodiment, the resistance force application means 7, which is configured to generate a sliding resistance during rotation of the interlocking member 2, and the plurality of seal means (the first seal member 12 and the second seal member 13), which seal the gap between the interlocking member 2 and the case 1 at predetermined positions, are selectively attachable. In addition, the first urging means 3 and the selectively attached resistance force application means 7 or seal means (first seal member 12 or second seal member 13) are configured to generate a predetermined operating torque during rotation of the interlocking member 2. Thus, it is possible to easily set a predetermined operating torque according to the requirements of a vehicle. In addition, the selectively attached seal means are capable of achieving a seal effect in addition to generating an operating torque.

In addition, the seal means according to the present embodiment are formed by the seal members (the first seal member 12 and the second seal member 13) having different diameters. Thus, it is possible to easily set a predetermined operating torque with a combination of the selectively attached seal members. In addition, the resistance force application means 7 according to the present embodiment is formed by a friction material assembled in the state of being in contact with the sliding surface n of the interlocking member 2. Thus, it is possible to easily generate a desired sliding resistance and to thus generate an operating torque.

Furthermore, the throttle grip device according to the present embodiment includes the cover member 11, which covers the opening side end portion N1 of the case 1 and has the opening portion 11a allowing the engaged portions 2a of the interlocking member 2 to be engaged with the engaging portions Ga. In addition, at least one of the selectively attachable seal means is formed by the first seal member 12, which seals the gap between the interlocking member 2 and the opening portion 11a of the cover member 11. Thus, it is possible to set an operating torque while the first seal member 12 seals the gap between the interlocking member 2 and the opening portion 11a of the cover member 11. In addition, at least one of the selectively attachable seal means is formed by the second seal member 13, which seals the gap between the interlocking member 2 and the bottom side end portion N2 of the case 1. Thus, it is possible to set an operating torque while the second seal member 13 seals the gap between the interlocking member 2 and the bottom side end portion N2 of the case 1.

Furthermore, the throttle grip device according to the present embodiment includes the cover member 11, which covers the opening side end portion N1 of the case 1 and has the opening portion 11a allowing the engaged portions 2a of the interlocking member 2 to be engaged with the engaging portions Ga. In addition, the interlocking member 2 is configured to include the cylindrical portion 2e extending to the bottom side end portion N2 of the case 1. In addition, the selectively attachable seal means are formed by the first seal member 12, which seals the gap between the interlocking member 2 and the opening portion 11a of the cover member 11, and the second seal member 13, which seals the gap between the cylindrical portion 2e of the interlocking member 2 and the bottom side end portion N2 of the case 1. Thus, it is possible to generate a predetermined operating torque according to each operating torque generated by the first seal member 12 and the second seal member 13.

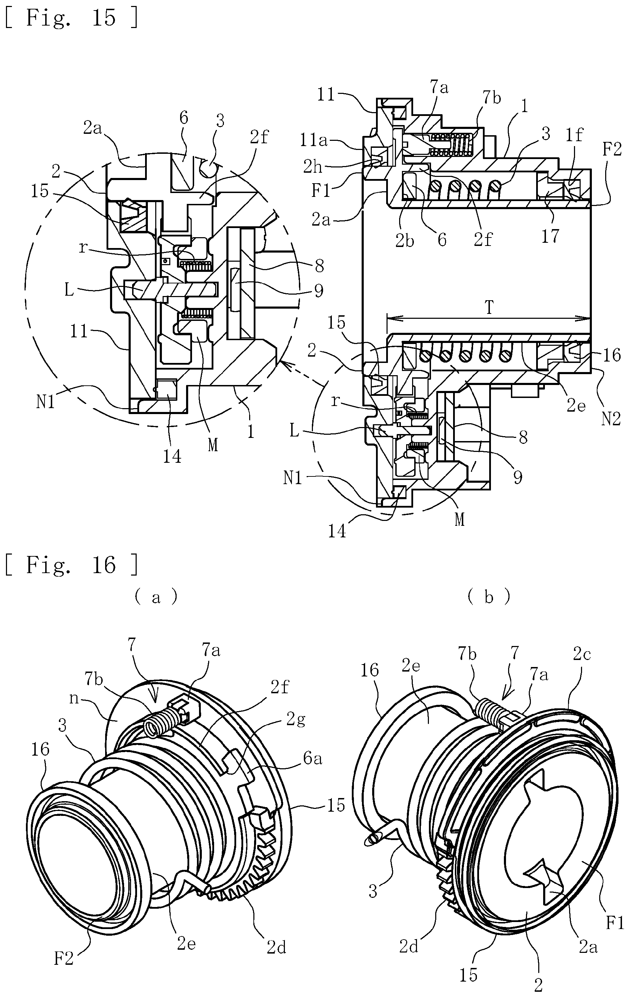

The present embodiment has been described above, but the present invention is not limited thereto. For example, in the present embodiment, the first seal member 12 and the second seal member 13 are formed by O rings having different diameters. Alternatively, as illustrated in Figs. 15 and 16, a first oil seal 15, which seals the gap between the interlocking member 2 and the opening portion 11a of the cover member 11, and a second oil seal 16, which seals the gap between the cylindrical portion 2e of the interlocking member 2 and the bottom side end portion N2 of the case 1, may be used. The second oil seal 16 is retained by a retaining member 17. In addition, the first seal member 12 and the second seal member 13 may be made of different materials or may have different cross section diameters.

Furthermore, the throttle grip device according to the present embodiment may include, instead of the magnetic sensor 9, a different sensor (such as a sensor not using magnetism) capable of detecting a rotation angle of the throttle grip G. Furthermore, the present embodiment is configured to stop (cancel) the constant vehicle speed maintaining control of a constant vehicle speed maintaining device (an auto-cruise device) when the counter rotation of the throttle grip G is detected. However, it is sufficient to activate or not to activate a predetermined function of a vehicle when the counter rotation of the throttle grip G is detected, and the throttle grip G may be configured not to counterrotate (that is, the throttle grip G may be configured to rotate forward only). In addition to two-wheeled vehicles as described in the present embodiment, the present embodiment may be applied to different vehicles (such as an ATV and a snowmobile) including the handlebar H. In addition to vehicles including engines as drive sources, the present embodiment may be applied to, for example, vehicles including electric motors as drive sources.

### Industrial Applicability

The present invention is also applicable to, for example, throttle grip devices having different external shapes or throttle grip devices having other functions without departing from the gist of the present invention.

### Reference Signs List

- 1: case
- 1a: first housing portion
- 1b: second housing portion
- 1c: third housing portion
- 1d: stopper portion
- 1e: catch portion
- 1f: annular recess
- 1g: housing recess
- 1h: attachment recess
- 2: interlocking member
- 2a: engaged portion
- 2b: housing portion
- 2c: flange
- 2d: gear
- 2e: cylindrical portion
- 2f: annular wall portion
- 2g: cutout
- 2h: attachment groove
- 3: first urging means (helical torsion spring)
- 4: second urging means (coil spring)
- 5: rotation member
- 6: urging force selection means
- 6a: projection
- 6b: spring receiving portion
- 7: resistance force application means
- 7a: friction member
- 7b: spring
- 8: printed circuit board
- 9: magnetic sensor (rotation angle detection means)
- 10: retaining member
- 11: cover member
- 11a: opening portion
- 11b: recess
- 12: first seal member (O ring)
- 13: second seal member (O ring)
- 14: third seal member (gasket)
- 15: first oil seal
- 16: second oil seal
- 17: retaining member
- G: throttle grip
- Ga: engaging portion
- M: magnet
- n: sliding surface
- S: switch case
- F1: surface end portion
- F2: tip portion
- N1: opening side end portion
- N2: bottom side end portion

## Claims

1. A throttle grip device comprising:
a throttle grip configured to be able to be rotated by a driver;
an interlocking member including an engaged portion being able to be engaged with an engaging portion included in the throttle grip, the interlocking member being able to rotate in conjunction with the throttle grip;
a case having an opening side end portion and a bottom side end portion, the interlocking member being rotatably held by the case;
a cover member covering the opening side end portion of the case, the cover member having an opening portion allowing a surface end portion having the engaged portion of the interlocking member to face the throttle grip; and
a rotation angle detection means capable of detecting a rotation angle of the throttle grip by detecting a rotation angle of the interlocking member, a drive source of a vehicle being controllable according to the rotation angle of the throttle grip detected by the rotation angle detection means,
wherein the interlocking member further includes a cylindrical portion extending to the bottom side end portion of the case.

2. The throttle grip device according to Claim 1, further comprising
an urging means configured to urge the interlocking member toward an initial position during rotation of the throttle grip, the urging means being housed in a gap between the case and the cylindrical portion of the interlocking member.

3. The throttle grip device according to Claim 1, further comprising:
a first seal member sealing a gap between the interlocking member and the opening portion of the cover member; and
a second seal member sealing a gap between the cylindrical portion of the interlocking member and the bottom side end portion of the case.

4. The throttle grip device according to Claim 3, further comprising
a third seal member sealing a gap between a peripheral portion of the opening side end portion of the case and a peripheral portion of the cover member.

5. The throttle grip device according to Claim 4, further comprising
a rotation member configured to rotate in conjunction with the interlocking member, wherein
the rotation angle detection means is capable of detecting a rotation angle of the throttle grip by detecting a rotation angle of the rotation member, and
the cover member covers the part where the rotation member is disposed, while hermetically sealing the part with the first seal member and the third seal member.

6. The throttle grip device according to Claim 5, wherein
the rotation member rotates around a shaft member, and
the cover member has a recess supporting one end of the shaft member.

7. A throttle grip device comprising:
a throttle grip configured to be able to be rotated by a driver;
an interlocking member including an engaged portion being able to be engaged with an engaging portion included in the throttle grip, the interlocking member being able to rotate in conjunction with the throttle grip;
a case having an opening side end portion and a bottom side end portion, the interlocking member being rotatably held by the case;
a rotation angle detection means capable of detecting a rotation angle of the throttle grip by detecting a rotation angle of the interlocking member, a drive source of a vehicle being controllable according to the rotation angle of the throttle grip detected by the rotation angle detection means; and
an urging means configured to urge the interlocking member toward an initial position during rotation of the throttle grip, wherein
a resistance force application means configured to generate a sliding resistance during rotation of the interlocking member, and a plurality of seal means sealing a gap between the interlocking member and the case at predetermined positions are selectively attachable, and
the urging means and the selectively attached resistance force application means or seal means are configured to generate a predetermined operating torque during rotation of the interlocking member.

8. The throttle grip device according to Claim 7, wherein the seal means are formed by seal members having different diameters.

9. The throttle grip device according to Claim 7, wherein the resistance force application means is formed by a friction material assembled in a state of being in contact with a sliding surface of the interlocking member.

10. The throttle grip device according to Claim 7, further comprising
a cover member covering the opening side end portion of the case, the cover member having an opening portion allowing the engaged portion of the interlocking member to be engaged with the engaging portion,
wherein at least one of the selectively attachable seal means is formed by a first seal member sealing a gap between the interlocking member and the opening portion of the cover member.

11. The throttle grip device according to Claim 10, wherein at least one of the selectively attachable seal means is formed by a second seal member sealing a gap between the interlocking member and the bottom side end portion of the case.

12. The throttle grip device according to Claim 7, further comprising
a cover member covering the opening side end portion of the case, the cover member having an opening portion allowing the engaged portion of the interlocking member to be engaged with the engaging portion, wherein
the interlocking member is configured to include a cylindrical portion extending to the bottom side end portion of the case, and
the selectively attachable seal means are formed by a first seal member sealing a gap between the interlocking member and the opening portion of the cover member, and a second seal member sealing a gap between the cylindrical portion of the interlocking member and the bottom side end portion of the case.
